# EUROPÄISCHE PATENTSCHRIFT

(11) **EP 1 170 601 B1**
(45) Veröffentlichungstag und Bekanntmachung des Hinweises auf die Patenterteilung: **20.12.2006**
(21) Anmeldenummer: 01110767.9
(22) Anmeldetag: 03.05.2001
(51) Int. Cl.: G01V 8/20, F16P 3/14

(54) **Lichtgitter**
Light grid
Grille de lumière

(30) Priorität: 07.07.2000 DE 10033077
(43) Veröffentlichungstag der Anmeldung: 09.01.2002
(60) Teilanmeldung: 04009357.7
(73) Patentinhaber: SICK AG, 79183 Waldkirch, Breisgau (DE)
(72) Erfinder: Jürs, Heiner, 79183 Waldkirch (DE); Görnemann, Otto, 41564 Kaarst (DE)
(74) Vertreter: Manitz, Finsterwald & Partner GbR

(56) Entgegenhaltungen:
- EP-A- 0 567 717
- EP-A- 0 962 788
- US-A- 5 130 532
- US-A- 5 233 185
- US-A- 5 583 334

## Beschreibung

Die Erfindung betrifft ein Lichtgitter zur Erfassung von Objekten in einem Überwachungsbereich mit einer mehrere Lichtsender umfassenden Sendeeinheit und einer mehrere Lichtempfänger umfassenden Empfangseinheit, bei dem in Abhängigkeit von einem zwischen Sende- und Empfangseinheit übertragenen Synchronisationssignal zeitlich nacheinander jeweils Paare von einander zugeordneten, den Überwachungsbereich begrenzenden Lichtsendern und Lichtempfängern aktivierbar sind.

Lichtgitter der genannten Art finden beispielsweise in hoch automatisierten Fertigungssystemen Anwendung, bei denen Werkstücke automatisch zugeführt, bearbeitet und wieder abgeführt werden. Diese Fertigungssysteme sind in der Regel mit vollautomatischen Bearbeitungszentren (z.B. Robotereinrichtungen) und Transporteinrichtungen versehen. Da die Zuführ-, Bearbeitungs- und Wegführbereiche zugleich mögliche Gefahrenbereiche beispielsweise für Bedienungspersonal darstellen, ist es bei solchen Systemen erforderlich, einen Schutz vor unzulässigem Eindringen vorzusehen. Ein solcher Schutz kann mittels Lichtgittern der eingangs erwähnten Art erreicht werden.

Da zum Betrieb eines Lichtgitters ein zwischen Lichtsender und Lichtempfänger synchroner Betrieb erforderlich ist, ist es bei Lichtgittern nach dem Stand der Technik üblich, beispielsweise vom ersten Lichtsender der Sendeeinheit ein mit einem ersten Überwachungssignal gekoppeltes Synchronisationssignal in Richtung des ersten Lichtempfängers der Empfangseinheit auszusenden, um diese zu aktivieren. Im Anschluss an diesen Synchronisationsvorgang werden dann nach einem vorgegebenen Zeitschema nacheinander alle weiteren Paare aus einander zugeordneten Lichtsendern und Lichtempfängern aktiviert, um so die gewünschte Überwachungsfunktion zu realisieren. Nachteilig an dieser Vorgehensweise ist, dass immer dann, wenn das Synchronisationssignal beispielsweise durch ein in den Überwachungsbereich einfahrendes Werkstück unterbrochen wird, keine Synchronisierung zwischen Sende- und Empfangseinheit erfolgen kann und somit der Betrieb des Lichtgitters unterbrochen ist. Es ist daher übliche Praxis, Lichtgitter für beispielsweise die Zeit des Ein- und Ausfahrens eines Objektes zu deaktivieren, wodurch auf nachteilige Weise in dieser Zeit kein Schutz gegen unzulässiges Eindringen besteht.

Aufgabe der Erfindung ist es daher, ein Lichtgitter zu schaffen, das in möglichst allen Überwachungssituationen eine sichere und zuverlässige Synchronisierung zwischen Sendeeinheit und Empfangseinheit zulässt, robust im Betrieb und einfach herzustellen ist.

Diese Aufgabe wird gemäß der vorliegenden Erfindung gelöst durch eine Vorrichtung gemäß den Merkmalen von Anspruch 1 und insbesondere dadurch, dass außerhalb des Überwachungsbereichs wenigstens ein Lichtleiter zur Übertragung des Synchronisationssignals vorgesehen ist.

Mit einer solchen Vorrichtung wird erreicht, dass der Synchronisierungsvorgang vollständig von der Übertragung des Überwachungssignals im Überwachungsbereich abgekoppelt wird und somit eine von dem im Überwachungsbereich liegenden Licht-Übertragungsweg zwischen Sendeeinheit und Empfangseinheit unabhängige Synchronisierung zwischen Sende- und Empfangseinheit erfolgt. Der erfindungsgemäß extra für die Übertragung des Synchronisationssignals vorgesehene Lichtleiter gewährleistet, dass ungeachtet einer Zuführung eines Objektes in den Überwachungsbereich sowie ungeachtet dessen Lage und Bewegung innerhalb des Überwachungsbereiches eine sichere Synchronisierung der Empfangseinheit in Abhängigkeit von der Sendeeinheit erfolgt. Gleichzeitig ist die Übertragung des Synchronisationssignals mittels Leitung weniger anfällig gegenüber Störungen, wie beispielsweise Umgebungseinflüssen, als bei Übertragung durch Luft.
Mit der erfindungsgemäßen Vorrichtung wird somit ein zuverlässiger Schutz gegen Eindringen unzulässiger Objekte in den Überwachungsbereich geschaffen, wobei keine Abschaltung des Lichtgitters oder von Teilen des Lichtgitters beim Zuführen eines Objektes mehr erforderlich ist. Zudem ist die erfindungsgemäße Vorrichtung kostengünstig zu realisieren und zuverlässig und robust im Betrieb.

Schließlich kann der erfindungsgemäß vorgesehene Lichtleiter auch problemlos bei bereits montierten bzw. ausgelieferten Lichtgittern nachgerüstet werden, indem er mit seinen beiden Enden mittels geeigneter Koppelelemente mit einem Lichtsender der Sendeeinheit und einem Lichtempfänger der Empfangseinheit verbunden wird.

Der Begriff Licht ist in der vorliegenden Anmeldung generell nicht als Beschränkung auf sichtbares Licht zu verstehen. Vielmehr soll unter dem Begriff Licht allgemein jede Art von Licht und insbesondere jede Art von UV-Licht, IR-Licht und sichtbarem Licht zu verstehen sein.

Erfindungsgemäß ist der Lichtleiter außerhalb des Überwachungsbereiches und insbesondere in ausreichender Entfernung von diesem angeordnet. Dabei kann die Leitung zum Übertragen des Synchronisationssignals so weit außerhalb des Überwachungsbereichs verlegt sein, dass sie gegen äußere Einflüsse, wie beispielsweise Schmier- und Schneidmittel, Metallspäne, Temperatureinflüsse usw. geschützt ist.

Zweckmäßigerweise verbindet der Lichtleiter den ersten oder letzten Lichtsender mit dem ersten oder letzten Lichtempfänger der mehrere Lichtsender bzw. Lichtempfänger umfassenden Sende- und Empfangseinheiten. Über diese paarweise Zuweisung von Lichtsender zu Lichtempfänger können nach Aktivierung des ersten oder letzten Paares aus Lichtsender und Lichtempfänger alle weiteren Paare über die gesamte Länge des Lichtgitters nach einem vorgegebenen Zeitschema aktiviert werden. Gegebenenfalls kann aber auch ein zwischen dem ersten und letzten Paar von Lichtsendern und Lichtempfängern angeordnetes Paar mit dem Lichtleiter verbunden sein, wenn dies z. B. betriebsbedingt sinnvoll ist.

Vorzugsweise sind nach Aussendung und Empfang des Synchronisationssignals die weiteren Lichtsender / Lichtempfänger nacheinander und mit definierten Zeitabständen selbsttätig aktivierbar. Dies bedeutet, dass die Sendeeinheit und die Empfangseinheit nach deren Aktivierung zwar unabhängig voneinander, aber synchronisiert zueinander betrieben werden, wobei die Lichtsender und -empfänger selbsttätig "weitergeschaltet" werden, bis das Ende der Sende- und Empfangseinheiten erreicht oder ein unzulässiges Objekt detektiert ist. Dabei sendet die Sendeeinheit in bestimmten Zeitabständen über ihre Lichtsender Lichtsignale aus und die mit der Sendeeinheit synchronisierte Empfangseinheit erwartet zum gleichen Zeitpunkt in einem entsprechenden Bereich den Empfang der ausgesandten Lichtsignale.

Bei einer bevorzugten Ausführungsform der Erfindung sind zulässige Objektgrößen und / oder -bewegungen eines sich im Überwachungsbereich befindlichen Objektes in der Auswerteeinheit programmierbar bzw. einlernbar. Werkzeuge z. B. Roboterarme und die zu bearbeitenden Objekte sowie deren Bewegungen bewirken in diesen, als zulässig definierten Bereichen des Lichtgitters keine Abschaltung des Fertigungssystems. Die Detektion eines Fehlerzustandes erfolgt erst bei einer dem Lichtgittersystem zuvor nicht als zulässig mitgeteilten Objektgröße oder -bewegung, beispielsweise einer eintretenden Person, und bewirkt ein Abschalten des mit dem Lichtgitter in Verbindung stehenden Fertigungssystems.

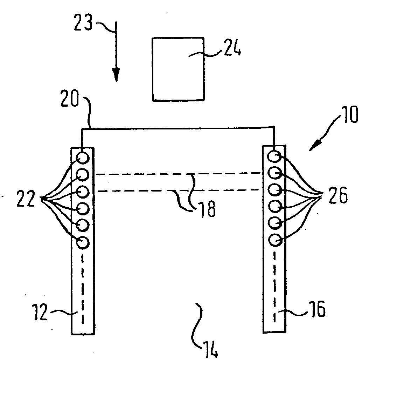

Die Erfindung wird im Folgenden beispielhaft anhand eines Ausführungsbeispiels unter Bezugnahme auf die Zeichnung beschrieben, welche eine schematische Ansicht eines erfindungsgemäßen Lichtgitters zeigt.

In der Zeichnung ist ein Lichtgitter 10 gezeigt, das eine Sendeeinheit 12 und eine Empfangseinheit 16 umfasst, zwischen denen einen Überwachungsbereich 14 definiert ist. Dabei besteht die Sendeeinheit 12 aus mehreren, in einer Reihe angeordneten Lichtsendern 22, von denen jedoch nur sechs Lichtsender 22 dargestellt sind. Ebenso besteht die Empfangseinheit 16 aus mehreren, in einer Reihe angeordneten Lichtempfängern 26, von denen ebenfalls nur sechs gezeigt sind.

Sende- und Empfangseinheit 12, 16 sind parallel zum Boden (nicht dargestellt) einer Werkhalle angeordnet, wobei sich der Boden parallel zur Zeichenebene erstreckt.
Dabei ist die Länge der Sendeeinheit 12 und der Empfangseinheit 16 so bemessen, dass beispielsweise ein durch Personen erfolgendes unerkanntes Durchschreiten des Lichtgitters 10 nicht möglich ist. In Versuchen hat sich eine ungefähre Länge von 900 mm als zweckmäßig erwiesen.

Die Sendeeinheit 12 und die Empfangseinheit 16 sind im dargestellten Ausführungsbeispiel parallel zueinander in einem Abstand von etwa 3 bis 4 m angeordnet. Der Abstand von Sendeeinheit 12 und Empfangseinheit 16 zum Boden der Werkhalle ist von der jeweiligen Anwendung bzw. dem zu schützenden Bereich abhängig. Z. Bsp. sind die Sendeeinheit 12 und die Empfangseinheit 16 parallel mit einem Abstand von 400 mm zum Boden angeordnet. Dabei weisen die Lichtsender 22 der Sendeeinheit 12 in Richtung der Lichtempfänger 26 der Empfangseinheit 16, wobei jedem Lichtsender 22 ein entsprechend gegenüberliegender Lichtempfänger 26 zugeordnet ist. Zwischen den Lichtsendern 22 und den Lichtempfängern 26 sind Übertragungswege 18 zur Übertragung von Überwachungssignalen dargestellt.

Mit Bezugszeichen 20 ist ein über einen beliebigen Weg verlegter Lichtleiter bezeichnet, die/der die Sendeeinheit 12 und die Empfangseinheit 16 zur Übertragung eines Synchronisationssignals miteinander verbindet. Genauer verbindet bei dieser Ausführungsform die Leitung 20 den ersten Lichtsender 22 der Sendeeinheit 12 mit dem ersten Lichtempfänger 26 der Empfangseinheit 16. Damit wird vermieden, dass das Synchronisationssignal über einen Übertragungsweg 18 des Überwachungssignals, also über den eigentlichen Überwachungsbereich, übertragen werden muss.

Die Funktionsweise des dargestellten Lichtgitters 10 ist wie folgt:

Nachdem der erste Lichtempfänger 26 der Empfangseinheit 16 ein vom ersten Lichtsender 22 der Sendeeinheit 12 ausgesandtes und über die Leitung 20 übertragenes Synchronisationssignal empfangen hat, werden die übrigen Lichtsender 22 und die übrigen Lichtempfänger 26 nacheinander mit Zeitabständen von beispielsweise 100 ms selbsttätig aktiviert. Dabei werden die Sendeeinheit 12 und die Empfangseinheit 16 nach der Synchronisierung unabhängig voneinander betrieben, wobei die Lichtsender 22 und -empfänger 26 selbsttätig in einem gleichermaßen für Lichtsender 22 und -empfänger 26 geltenden Zeitraster "weitergeschaltet" werden, bis das Ende der Sende- und Empfangseinheiten 12, 16 erreicht oder ein unzulässiges Objekt detektiert ist.

Wenn nun ein in einem Fertigungssystem zu bearbeitendes Objekt 24 in beispielsweise einer Objektzuführrichtung 22 in den Überwachungsbereich 14 des Lichtgitters 10 bewegt wird, werden die ersten Übertragungswege 18 zur Übertragung des Überwachungssignals nacheinander unterbrochen. Da das Objekt 24 in Richtung 22 alle Übertragungswege 18 nacheinander durchschreitet und während dieser Zeit wiederholt eine Synchronisierung der Empfangseinheit 16 in Abhängigkeit von der Sendeeinheit 12 erfolgen muss, wäre in einem solchen Zustand eine Synchronisierung der Empfangseinheit 16 nicht möglich, wenn die Synchronisierung über einen Übertragungsweg 18 erfolgen würde. Durch die Vorsehung der außerhalb des Überwachungsbereichs 14 verlaufenden Leitung 20 erfolgt jedoch die Synchronisierung der Empfangseinheit 16 unabhängig von einer Unterbrechung der Übertragungswege 18, wodurch bei dieser Ausführungform das Synchronisationssignal immer und jederzeit ungestört über die Leitung 20 übertragen wird, egal wo sich das Objekt 24 gerade befindet.

## Patentansprüche

1. Lichtgitter (10) zur Erfassung von Objekten (24) in einem Überwachungsbereich mit einer mehrere Lichtsender (22) umfassenden Sendeeinheit (12) und einer mehrere Lichtempfänger (26) umfassenden Empfangseinheit (16), bei dem in Abhängigkeit von einem zwischen Sende- und Empfangseinheit übertragenen Synchronisationssignal zeitlich nacheinander jeweils Paare von einander zugeordneten, den Überwachungsbereich begrenzenden Lichtsendern und Lichtempfängern aktivierbar sind,
**dadurch gekennzeichnet,**
**dass** außerhalb des Überwachungsbereichs wenigstens ein Lichtleiter (20) zur Übertragung des Synchronisationssignals vorgesehen ist.

2. Lichtgitter nach Anspruch 1,
**dadurch gekennzeichnet,**
**dass** der Lichtleiter (20) den ersten oder letzten Lichtsender (22) mit dem ersten oder letzten Lichtempfänger (26) der mehrere Lichtsender (22) bzw. Lichtempfänger (26) umfassenden Sende- und Empfangseinheiten (12, 16) verbindet.

3. Lichtgitter nach einem der vorhergehenden Ansprüche,
**dadurch gekennzeichnet,**
**dass** nach Aussendung und Empfang des Synchronisationssignals die weiteren Lichtsender (22) / Lichtempfänger (26) - Paare nacheinander mit definierten Zeitabständen selbsttätig aktivierbar sind.

4. Lichtgitter nach einem der vorhergehenden Ansprüche,
**dadurch gekennzeichnet,**
**dass** zulässige Objektgrößen und / oder -bewegungen eines sich im Überwachungsbereich (14) befindlichen Objektes (24) in einer Kontrolleinheit programmierbar bzw. einlernbar sind.

## Claims

1. A light grid (10) for the detection of objects (24) in a monitoring region having a transmitter unit (12) comprising a plurality of light transmitters (22) and a receiver unit (16) comprising a plurality of light receivers (26), in which respective pairs of light transmitters and light receivers associated with one another and bounding the monitoring region can be activated in time succession in dependence on a synchronization signal transmitted between the transmitter unit and the receiver unit, **characterized in that** at least one light guide (20) is provided outside the monitoring region for the transmission of the synchronization signal.

2. A light grid in accordance with claim 1, **characterized in that** the light guide (20) connects the first or last light transmitter (22) to the first or last light receiver (26) of the transmitter and receiver units (12, 16) comprising a plurality of light transmitters (22) or light receivers (26) respectively.

3. A light grid in accordance with any one of the preceding claims, **characterized in that** the other light transmitter (22) / light receiver (26) pairs can be automatically activated in succession at defined time intervals after the transmission and reception of the synchronization signal.

4. A light grid in accordance with any one of the preceding claims, **characterized in that** permitted object sizes and/or movements of an object (24) located in the monitoring region (14) can be programmed into or learned by a control unit.

## Revendications

1. Trame lumineuse (10) pour détecter des objets (24) dans une zone surveillée, comprenant une unité émettrice (12) qui comporte plusieurs émetteurs de lumière (22), et une unité réceptrice (16) qui comporte plusieurs récepteurs de lumière (26), dans laquelle, en fonction d'un signal de synchronisation transmis entre unité émettrice et unité réceptrice, des paires respectives d'émetteurs de lumière et de récepteurs de lumière associés l'un à autre et délimitant la zone surveillée peuvent être activées temporellement les unes après les autres,
**caractérisée en ce que**, à l'extérieur de la zone surveillée, il est prévu au moins un guide de lumière (20) pour la transmission du signal de synchronisation.

2. Trame lumineuse selon la revendication 1,
**caractérisée en ce que** le guide de lumière (20) relie le premier ou le dernier émetteur de lumière (22) au premier ou au dernier récepteur de lumière (26) des unités émettrices et réceptrices (12, 16) comportant plusieurs émetteurs de lumière (22) et plusieurs récepteurs de lumière (26) respectivement.

3. Trame lumineuse selon l'une des revendications précédentes,
**caractérisée en ce que**, après émission et réception du signal de synchronisation, les autres paires émetteur de lumière (22)/récepteur de lumière (26) sont susceptibles d'être activées automatiquement les unes après les autres à des intervalles temporels définis.

4. Trame lumineuse selon l'une des revendications précédentes,
**caractérisée en ce que** des tailles d'objets et/ou des déplacements d'objets admissibles concernant un objet (24) qui se trouve dans la zone surveillée (14) sont susceptibles d'être programmé(e)s dans une unité de commande, ou susceptibles d'être entré(e)s par apprentissage.
